# EUROPÄISCHE PATENTANMELDUNG

(11) **EP 0 633 672 A1**
(43) Veröffentlichungstag der Anmeldung: **11.01.1995**
(21) Anmeldenummer: 94107671.3
(22) Anmeldetag: 18.05.1994
(51) Int. Cl.: H04B 10/155

(54) **Optischer Sender zum Aussenden eines intensitäts- und phasenmodulierten Lichstrahls**

(30) Priorität: 08.07.1993 CH 2051/93; 18.10.1993 CH 3134/93
(71) Anmelder: ASCOM TECH AG, CH-3018 Bern (CH)
(72) Erfinder: Wang, Yu, Dr., CH-1700 Fribourg (CH)
(74) Vertreter: Schwerdtel, Eberhard, Dr.

(57) **Zusammenfassung**

Der optische Sender (3) dient zum Aussenden eines Lichtstrahls A, der ein periodisches Hilfsträgersignal aufweist, welches durch ein Nutzsignal (NS) phasenwinkel- oder frequenzmoduliert ist. Der Sender (3) umfasst wenigstens einen Laser (11), einen Strahlteiler (12), einen Strahlkoppler (16), einen Lichtmodulator (14), eine Optikfaser (18) und optische Verbindungen zum Verbinden dieser Einheiten. Hierzu kommen mit Vorteil zwei Polarisationsüberwacher (21, 23), und ein Regelkreis aus einem weiteren Strahlteiler (25), einer Fotodiode (27), einer Steuerschaltung (28), einem Stellglied (29) und der Optikfaser (18). Der vom Laser (11) abgegebene erste Lichtstrahl (L1) wird durch den Strahlteiler (12) geteilt. Der eine Teilstrahl (L2) läuft in die Optikfaser (18) ein und erzeugt in dieser durch stimulierte Brillouin-Streuung einen rücklaufenden Lichtstrahl (L4) leicht veränderter Frequenz. Der andere Teilstrahl (L3) läuft durch den Modulator (14) und wird in diesem phasenmoduliert. Die letztgenannten Strahlen (L3, L4) vereinigen sich im Koppler (16) und ergeben den Strahl A. Der Regelkreis wirkt mittels des piezoelektrischen Effektes auf die Länge der Optikfaser (18) ein und verhindert spontane Wechsel zwischen den verschiedenen möglichen Kavitätsmoden der Faser (18).

## Beschreibung

Die Erfindung betrifft einen optischen Sender zum Aussenden eines intensitäts- und phasenmodulierten Lichtstrahls entsprechend dem Oberbegriff des ersten Patentanspruchs.

Die Verwendung von Lichtstrahlen als Träger für eine Informationsübertragung ist bekannt. Es ist weiter bekannt, dass es hierbei notwendig ist, den vom Strahlsender ausgesandten Strahl zu modulieren. Bei Laserstrahlen kann eine solche Modulation am einfachsten dadurch erfolgen, dass durch Variation des Laserspeisestromes die Intensität des ausgesandten Strahles verändert wird. Dies bewirkt eine spezielle Art von Amplitudenmodulation. Den Vorteilen dieser einfachen, direkten Modulationsart steht jedoch ein relativ schlechtes Signal/Rausch-Verhältnis auf der Empfangsseite gegenüber.

Die Winkelmodulation eines periodischen Trägersignals verhält sich bezüglich des Signal/Rausch-Verhältnisses wesentlich besser als die Amplitudenmodulation, wenn gewisse Bedingungen erfüllt sind wie z.B. geeignete Form des Trägersignals und an die Verhältnisse angepasste Grösse der Phasenamplitude. Für die Informationsübertragung auf Glasfaserstrecken ist daher eine Winkel- oder Phasenmodulation grundsätzlich sehr interessant.

Bei den Versuchen zur Modulation des Phasenwinkels von sehr hochfrequenten Trägersignalen mit breitbandigen Nutzsignalen, z.B. im Mikrowellenbereich, spielten Modulationsverzerrungen stets eine erhebliche Rolle. Diese Verzerrungen haben bisher eine qualitativ ausreichende Übertragung von Nutzsignalen der genannten Art mittels Phasenmodulation verhindert.

Aus dieser Situation heraus ergibt sich die Aufgabe der Erfindung, eine Winkelmodulationseinrichtung für sehr hohe Trägerfrequenzen und sehr breitbandige Nutzsignale anzugeben. Hierbei soll die Einrichtung linear arbeiten und es gestatten, z.B. einen entsprechend modulierten Lichtstrahl auf eine Übertragungsstrecke auszusenden. Die Frequenzen der Nutzsignale sollen vor allem im GigaHertz-Bereich liegen.

Die Lösung dieser Aufgabe ist durch den kennzeichnenden Teil des unabhängigen Anspruchs gegeben. Die abhängigen Ansprüche geben Einzelheiten und technische Ausgestaltungen an.

Im folgenden wird die Erfindung anhand von vier Figuren beispielsweise beschrieben. Die Figuren zeigen:
Fig. 1 - Blockschaltbild eines optischen Senders,
Fig. 2 - Ringförmig geführte Monomodefaser,
Fig. 3 - Blockschaltbild einer ersten Verwendung des optischen Senders,
Fig. 4 - Blockschaltbild einer zweiten Verwendung des optischen Senders.

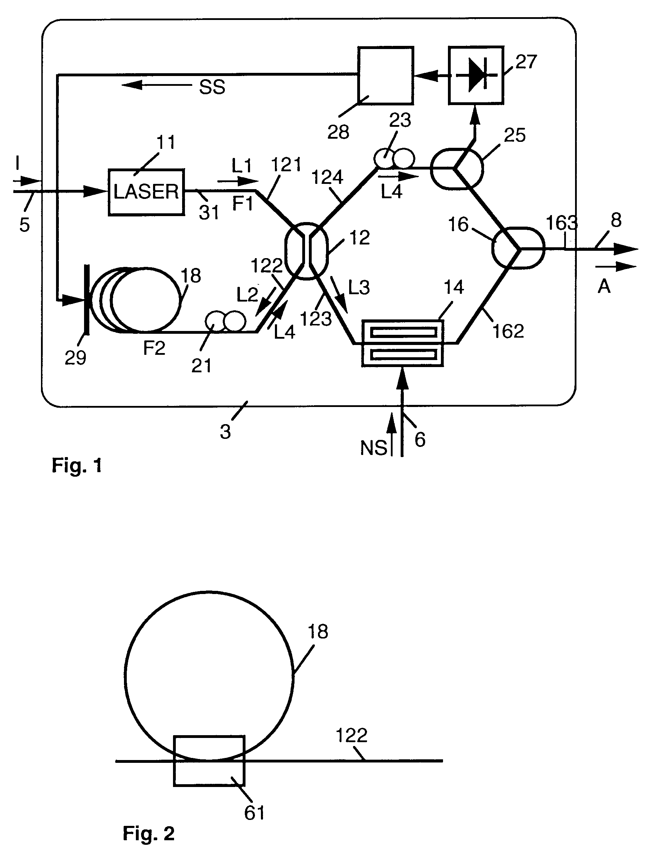

Fig. 1 zeigt den Aufbau des optischen Senders 3. Dieser Sender 3 besitzt einen elektrischen Speiseeingang 5, einen elektrischen Steuereingang 6 und einen optischen Ausgang 8. Der Sender umfasst im Minimum einen Laser 11, einen Strahlteiler 12, einen Lichtmodulator 14, einen Strahlkoppler 16 und eine Optikfaser 18. Weiter gehören zum Sender 3 mehrere optische Verbindungen zwischen den genannten Elementen 11, 12, 14, 16, 18.

Zum genannten Minimalbestand der Elemente 11, 12, 14, 16, 18 kommen mit Vorteil weitere Elemente hinzu, insbesondere zwei Polarisationsüberwacher 21, 23 (optical polarisation controller), ein weiterer Strahlteiler 25, eine Fotodiode 27, eine dieser nachgeschaltete Steuerschaltung 28 und ein von dieser Steuerschaltung gesteuertes Stellglied 29.

Der Sender 3 basiert zu wesentlichem Teil auf einem nichtlinearen Fasereffekt, der unter der Bezeichnung "stimulierte Brillouin-Streuung" bekannt ist. Hierzu wird auf die Publikation D. Cotter, "Stimulated Brillouin scattering in monomode optical fiber", Journal of Optical Communication, 4, Seiten 10-19, 1983 verwiesen. Ein ankommender Lichtstrahl bewirkt bei diesem Effekt in einer Optikfaser 18 eine sehr starke Stokes-Welle in Rückwärtsrichtung, sobald die sogenannte Brillouin-Schwelle überschritten wird. Diese Stokes-Welle besitzt bei einer Lichtwellenlänge des ankommenden Strahls von z.B. 1300 nm gegenüber dessen Wellenlänge einen Frequenzversatz von etwa 13 GHz. Insgesamt resultiert hieraus ein sekundärer Lichtstrahl in Gegenrichtung zum primären Strahl, wobei die beiden Lichtwellenlängen etwas verschieden sind.

Der optische Sender 3 arbeitet wie folgt: Der Laser 11 wird über den Speiseeingang 5 durch einen im wesentlichen konstanten elektrischen Strom I gespeist und gibt hierdurch an seinem Ausgang 31 einen ersten Lichtstrahl L₁ mit einer Lichtfrequenz F₁ und etwa konstanter Intensität ab. Die Frequenz F₁ entspricht z.B. der genannten Lichtwellenlänge von 1300 nm. Der erste Lichtstrahl L₁ erreicht den Strahlteiler 12 über dessen ersten Pol 121 und wird im Teiler 12 in zwei Teillichtstrahlen etwa gleicher Intensität und unveränderter Frequenz F1 aufgesplittet. Hierdurch entstehen ein zweiter und ein dritter Lichtstrahl L₂, L₃. Der zweite Lichtstrahl L₂ verlässt den Strahlteiler 12 über dessen zweiten Pol 122, durchläuft den ersten Polarisationsüberwacher 21 (sofern vorhanden) und tritt anschliessend in die Optikfaser 18 ein. Der dritte Lichtstrahl L₃ verlässt den Strahlteiler 12 über dessen dritten Pol 123 und läuft zum Lichtmodulator 14.

In der Optikfaser 18 entsteht durch die rücklaufende Stokes-Welle ein vierter Lichtstrahl L₄ mit einer verringerten Frequenz F₂, wie beschrieben. Der Lichtstrahl L₄ verlässt die Optikfaser 18 entgegen der Richtung des dritten Lichtstrahls L₃, durchläuft den ersten Polarisationsüberwacher 21 und erreicht den Strahlteiler 12 über dessen zweiten Pol 122. Er durchläuft den Strahlkoppler 12 und verlässt ihn über den vierten Pol 124, durchläuft den zweiten Polarisationsüberwacher 23 und den weiteren Strahlteiler 25 (sofern vorhanden) und erreicht den Strahlkoppler 16 über dessen ersten Pol 161.

Der dritte Lichtstrahl L₃ durchläuft den Lichtmodulator 14 und wird hier mit dem elektrisch anliegenden Nutzsignal NS phasenmoduliert. Er gelangt anschliessend zum zweiten Pol 162 des Strahlkopplers 16. Der Strahlkoppler 16 vereinigt den dritten L₃ und den vierten Lichtstrahl L₄ und bildet aus diesen einen gemeinsamen Ausgangsstrahl A, der am Optikausgang 8 aus dem Sender 3 austritt. Dieser Strahl A weist einen Träger mit einer (ersten) optischen Frequenz f1 auf, die im wesentlichen der Frequenz F1 des ersten Lichtstrahls L1 entspricht. Dieser optische Träger ist intensitätsmoduliert mit einer zweiten Frequenz f2, die dem genannten Frequenzversatz zwischen dem zweiten L2 und dem vierten Lichtstrahl L4 entspricht, also im GigaHertz-Bereich liegt. Diese Intensitätsmodulation bildet ein Hilfsträgersignal TS, das durch das Nutzsignal NS phasenmoduliert wird. Hierbei sollten die (dritten) Frequenzen f3 des Nutzsignals NS klein gegenüber den anderen Frequenzen f1 und f2 sein. Wegen der hohen optischen Frequenzen bedeutet dies jedoch immer noch, dass die benutzbare Bandbreite wesentlich höher sein kann als bei vergleichbaren elektrischen Einrichtungen.

Die genannten Eigenschaften des abgehenden Lichtstrahls A erklären sich durch die beschriebene stimulierte Brillouin-Streuung und durch die Gesetze der klassischen Wellentheorie. Hierfür ist zu beachten, dass die Aufsplittung des ersten Lichtstrahls L1 im Strahlteiler 12 so erfolgt, dass schliesslich der dritte L3 und der vierte Lichtstrahl L4 beim Zusammenfügen im Strahlkoppler 16 genügend ähnliche, im Idealfall gleiche Intensitäten aufweisen. Je ähnlicher die Intensitäten sind, umso tiefer ist die Intensitätsmodulation des Hilfsträgersignals TS. Wichtig ist weiter, dass der dritte L3 und der vierte Lichtstrahl L4 beim Zusammenfügen im Strahlkoppler 16 auch im wesentlichen gleichgerichtete Polarisationebenen aufweisen. Die zwei Polarisationsüberwacher 21, 23 dienen zum optimalen Erfüllen dieser weiteren Bedingung.

Bei dem geschilderten generellen Aufbau des Senders 3 kann eine erhebliche Anzahl von Details technisch frei gestaltet werden. Im folgenden werden daher Angaben über die praktische Ausgestaltung des Senders 3 gemacht:
- Als Laser 11 kommen generell alle Arten von Halbleiterlasern infrage, die für optische Kommunikationszwecke geeignet sind. Derartige Laser, insbesondere Ein-Longitudinal-Mode-Laser, lassen sich gemeinsam mit anderen Baueinheiten des Senders 3 fertigen, was ein erheblicher Vorteil ist. Es kann aber auch ein separater Laser höherer Leistung verwendet werden, z.B. ein Nd:YAG-Laser mit einer Strahlwellenlänge von z.B. 1319 nm.
- Als Strahlteiler 12 und/oder Strahlkoppler 16 lassen sich rein passive oder auch elektrisch steuerbare Elemente einsetzen. Als passive Elemente kommen beispielsweise optisch verkoppelte Fasern infrage, als aktive Elemente z.B. steuerbare Richtkoppler auf der Basis von Indiumphosphat.
- Als Lichtmodulator 14 kommt ein Bauelement infrage, das gesteuert durch eine zeitabhängige, elektrische Spannung V(t) das durchlaufende Licht phasenmoduliert. Solche Elemente gibt es beispielsweise als integrierte, optische Modulatoren.
- Als Optikfaser 18 kann grundsätzlich jede optische Monomodefaser verwendet werden. Diese Faser muss wenigstens eine Länge von mehreren Metern bis zu etwa hundert Metern besitzen. Ihr offenes Ende sollte nach Möglichkeit reflexionsfrei ausgebildet sein, um ein Reflektieren des ankommenden Lichtstrahls L2 zu vermeiden. Allerdings erreicht dieser Lichtstrahl L2 bei geeigneter Auslegung das Ende der Faser kaum, da seine Energie zur Bildung der Stokes-Welle aufgezehrt wird. Zu lange Fasern neigen zu dauernden, sporadischen Wechseln zwischen verschiedenen Moden. Sie sind aus diesem Grund in ihrer Wirkung instabil und daher weniger brauchbar.
- Als Optikfaser 18 kann auch eine ringförmig geführte Monomodefaser verwendet werden. Diese bevorzugte Ausbildung zeigt Fig. 2. Die Faser 18 weist hierbei eine Länge auf, die zwischen einigen wenigen Metern und einigen -zig Metern liegt. Die genaue Länge ist dabei abhängig vom Fasertyp und dem Lasertyp. Eine experimentell erprobte Länge ist beispielsweise 40 m. Die Faser 18 ist über einen Optokoppler 61 zum einen optisch in sich selbst geschlossen und zum anderen optisch mit dem ersten Polaritätsüberwacher 21 bzw. dem zweiten Pol 122 des Strahlteilers 12 verbunden. Die Faser 18 ist schliesslich bevorzugt aus noch zu beschreibendem Grund als einlagige Spule gewickelt. Der Kopplungsgrad des Optokopplers 61 muss an die Gesamtanordnung angepasst sein. Ein experimentell erprobter Wert beträgt 1:9.

Im Fall der ringförmig geführten Monomodefaser ist es möglich, die Anordnung auf einen einzigen der verschiedenen möglichen Kavitätsmoden zu stabilisieren. Hierdurch werden nicht nur die für die nicht ringförmige Faser beschriebenen, spontanen Modensprünge vermieden, sondern es ergibt sich zusätzlich ein äusserst schmales Frequenzspektrum des vierten Lichtstrahls L4, was von erheblicher Bedeutung ist.

Der Strahlteiler 25, die Fotodiode 27, die Steuerschaltung 28 und das Stellglied 29 bilden zusammen mit der Optikfaser 18 den für die genannte Stabilisierung notwendigen Regelkreis. Der Strahlteiler 25 leitet hierzu als Ist-Grösse einen geringen Anteil der Intensität des vierten Lichtstrahls L4 ab. Die Diode 27 wandelt dieses Licht in einen proportionalen, elektrischen Strom um und führt diesen Strom der steuerschaltung 28 zu. Die Steuerschaltung 28 erzeugt hieraus in geeigneter Weise ein Steuersignal SS, welches dem Stellglied 29 zugeführt wird. Das Stellglied 29 ist in Art eines Plattenkondensators ausgebildet, der zwischen seinen beiden Platten zumindest einen Teil der spulenförmig aufgewickelten Faser 18 enthält. Aufgrund des piezoelektrischen Effektes beeinflusst nun das am Stellglied 29 anliegende Steuersignal SS, d.h. eine Spannung die Gesamtlänge der Optikfaser 18, wodurch der vierte Lichtstrahl L4 sich - wie gesagt - auf einen einzigen der verschiedenen Kavitätsmoden stabilisiert. Dies verhindert sprunghafte Änderungen im Verhalten des Senders 3 bzw. des abgehenden Lichtstrahls A.

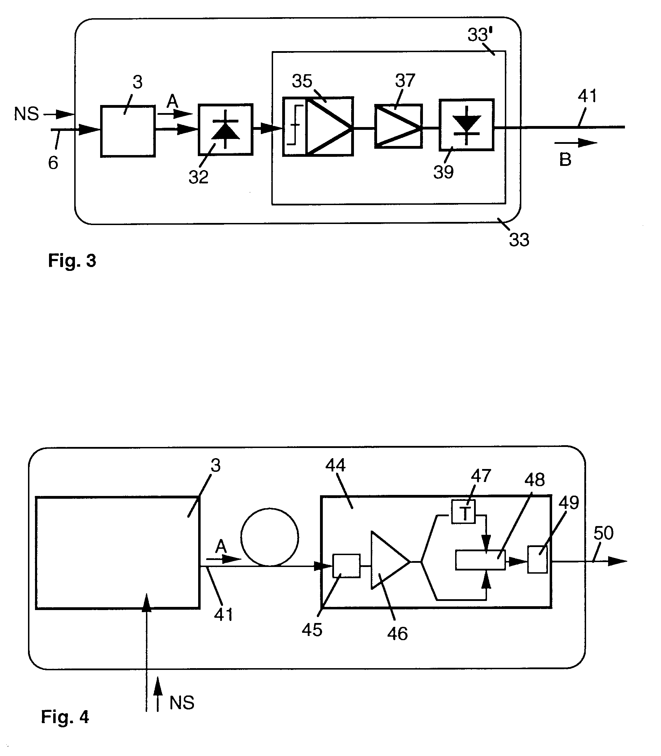

Fig. 3 zeigt das Blockschaltbild einer ersten Einrichtung, bei der der optische Sender 3 einsetzbar ist. Diese Einrichtung bildet eine Leistungs- bzw. Endstufe 33 eines optischen Mikrowellensenders. Hierbei wird der Sender 3 als Modulator relativ geringer Leistung benutzt. Das optische Ausgangssignal dieses Modulators, d.h. der Lichtstrahl A treibt über einen optoelektrischen Wandler 32 die eigentliche, nachgeschaltete Endstufe 33'. Diese umfasst einen hart getasteten Optowandler und Amplitudenbegrenzer 35, eine Treiberstufe 37 und einen Halbleiter-Leistungslaser 39 für z.B. das zweite Fenster einer angeschlossenen, abgehenden Lichtleitfaser 41. Die Endstufe 33' ist ein an sich bekannter optischer Sender mit direkt moduliertem Laser. Der ausgesandte Lichtstrahl B ist dabei wegen des Amplitudenbegrenzers 35 impulsförmig intensitätsmoduliert bzw. hart getastet (hard limited). Da der vom Sender 3 gelieferte Strahl A das periodische Hilfsträgersignal TS durch das Nutzsignal NS phasenmoduliert, überträgt sich diese Modulation auf den Leistungslaser 39 und den Lichtstrahl B.

Anstelle der genannten optischen Endstufe 33' kann in gleicher Weise auch eine elektrische Endstufe mit dem Sender 3 kombiniert werden, z.B. die Endstufe eines elektrischen Richtfunksenders.

Fig. 4 zeigt ein Blockschaltbild einer zweiten, experimentell erprobten Einrichtung, bei der der optische Sender 3 einsetzbar ist. Bei dieser Einrichtung bildet der Sender 3 selbst die Leistungsstufe einer optischen Übertragungsstrecke, bei der die Informationsübertragung digital mit Hilfe einer PSK-Modulation (phase shift keying) erfolgt. Bei dieser Übertragungsmethode werden die beiden Digitalwerte 0 und 1 durch zwei unterschiedliche Frequenzen dargestellt, zwischen denen bei jedem Taktschritt, falls notwendig, umgetastet wird.

Als Empfänger 44 für das ankommende PSK-Signal zeigt Fig 4 eine Fotodiode 45 mit nachgeschaltetem elektrischen Verstärker 46. Das entstehende elektrische Signal wird anschliessend gefiltert und demoduliert. Hierzu dient vor allem ein ausbalancierter Mixer 48 (double-balanced mixer), der das vorher aufgesplittete und im einen Arm durch eine Verzögerungsstufe 47 verzögerte Signal wieder vereinigt. Ein Integrator 49 beendet die Demodulation und gibt das regenerierte Datensignal an seinem Ausgang 50 ab.

Mit einer Einrichtung entsprechend Fig. 4 konnte experimentell eine Übertragung über eine 10 km lange Faser 41 durchgeführt werden bei einer Frequenz des Hilfsträgersignals TS im GigaHertzbereich, wie beschrieben, und einem Datenstrom von etwa 150 Mbit/s. Die genannten Werte bilden dabei keine absolute, obere Grenze des Möglichen. Weiter soll bemerkt werden, dass mit der Einrichtung entsprechend Fig. 4 nicht nur digitale Information, sondern in gleicher Weise auch Information in analoger Form übertragen werden kann.

Der optische Sender 3 bietet trotz der - elektrisch gesehen - sehr hohen Frequenzen technisch keine entscheidenden Probleme. Die Wechselwirkungen zwischen seinen Bestandteilen verlaufen im wesentlichen linear. Dies bewirkt eine überlegene lineare Wirkungsweise des optischen Senders 3 gegenüber vergleichbaren, elektrisch arbeitenden Sendern. Insbesondere ist eine lineare Phasenmodulation bei Frequenzen möglich, bei denen dies bisher nicht möglich war. Der optische Sender 3 erlaubt weiter eine vollständige oder zumindest eine weitgehende elektrooptische Integration. Trotz seines relativ komplizierten Aufbaus ist er daher preiswert herstellbar.

Die durch die stimulierte Brillouin-Streuung bewirkte Frequenz des vierten Lichtstrahls L4 ist im wesentlichen durch die Natur dieses Effektes gegeben. Sie kann jedoch durch den Typ der Optikfaser 18 und des Lasers 11 etwas beeinflusst werden. Weiter ist es möglich, diese Frequenz durch Mischung mit einer anderweitig erzeugten Frequenz wesentlich zu variieren. Dies ergibt Freiheit für eine Anpassung an unterschiedliche Bedürfnisse.

## Patentansprüche

1. Optischer Sender (3) mit einem Speiseeingang (5), einem Steuereingang (6) und einem Optikausgang (8) zum Aussenden eines kontinuierlichen Lichtstrahls (A) mit einer im wesentlichen konstanten ersten Frequenz (f1),
- wobei der Lichtstrahl zur Bildung eines periodischen Hilfsträgersignals (TS) mit einer im wesentlichen konstanten zweiten Frequenz (f2) intensitätsmoduliert ist,
- wobei zur Übermittlung eines Nutzsignals (NS) das Hilfsträgersignal (TS) phasenwinkel- oder frequenzmoduliert ist,
- wobei die zweite Frequenz (f2) klein gegenüber der ersten Frequenz (f1) ist, und
- wobei das Nutzsignal (NS) einen Frequenzbereich aufweist, dessen dritte Frequenzen (f3) insgesamt klein gegenüber der zweiten Frequenz (f2) sind,
gekennzeichnet,
- durch wenigstens einen Laser (11), einen Strahlteiler (12), einen Strahlkoppler (16), einen Lichtmodulator (14), eine Optikfaser (18) und durch optische Verbindungen zum Verbinden dieser Einheiten, derart,
- dass der Laser (11) elektrisch mit dem Speiseeingang (5) und sein Ausgangspol optisch mit einem ersten Pol (121) des Strahlteilers (12) verbunden ist,
- dass die Optikfaser (18) mit einem zweiten Pol (122) des Strahlteilers (12) verbunden ist,
- dass ein dritter Pol (124) des Strahlteilers (12) mit einem ersten Pol (161) des Strahlkopplers (16) verbunden ist,
- dass der Lichtmodulator (14) elektrisch mit dem Steuereingang (6) und seine beiden Pole optisch mit einem zweiten Pol (162) des Strahlkopplers (16) bzw. mit einem vierten Pol (123) des Strahlteilers (12) verbunden sind, und
- dass ein dritter Pol (163) des Strahlkopplers (16) den Optikausgang (8) bildet.

2. Optischer Sender nach Anspruch 1,
dadurch gekennzeichnet,
das die Optikfaser (18) eine einseitig offene Monomodefaser mit einer Länge zwischen mehreren Metern bis etwa hundert Metern ist.

3. Optischer Sender nach Anspruch 1,
dadurch gekennzeichnet,
das die Optikfaser (18) ein Faserring mit einer Länge von einigen Metern bis zu einigen -zig Metern ist, der durch einen Optokoppler (61) in sich geschlossen und mit dem zweiten Pol (122) des Strahlteilers (12) verbunden ist.

4. Optischer Sender nach Anspruch 1,
dadurch gekennzeichnet,
dass zusätzlich ein Polarisationsüberwacher (21) vorgesehen ist, der zwischen den zweiten Pol (122) des Strahlteilers (12) und die Optikfaser (18) eingefügt ist.

5. Optischer Sender nach Anspruch 1,
dadurch gekennzeichnet,
dass zusätzlich ein weiterer Polarisationsüberwacher (23) vorgesehen ist, der zwischen den dritten Pol (124) des Strahlteilers (12) und den ersten Pol (161) des Strahlkopplers (16) eingefügt ist.

6. Optischer Sender nach Anspruch 1 und 3,
dadurch gekennzeichnet,
dass zusätzlich ein Regelkreis aus einem weiteren Strahlteiler (25), einer Fotodiode (27), einem Stellglied (29) und der Optikfaser (18) vorgesehen ist,
wobei das Stellglied (29) in Art eines Plattenkondensators ausgebildet ist, und
wobei die Optikfaser (18) aus piezoelektrisch aktivem Material besteht und der Faserring als einlagige Spule gewickelt ist, deren Windungen wenigstens teilweise von den Platten des Plattenkondensators eng umschlossen werden.

7. Optischer Sender nach Anspruch 6,
dadurch gekennzeichnet,
dass der weitere Strahlteiler (25) zwischen dem dritten Pol (124) des ersten Strahlteilers (12) und dem ersten Pol (161) des Strahlkopplers (16) angeordnet ist.
